(19)

Europäisches
Patentamt
European
Patent Office
Office européen
des brevets

(11) **EP 1 906 343 A2**

(12) **EUROPEAN PATENT APPLICATION**

(43) Date of publication:
**02.04.2008 Bulletin 2008/14**

(51) Int Cl.:
***G06N 3/12*** *(2006.01)*

(21) Application number: **07116842.1**

(22) Date of filing: **20.09.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventors:<br>• **Kisacanin, Branislav**<br>  **Kokomo, IN 46902 (US)**<br>• **Schubert, Peter J.**<br>  **Naperville, IL 60540-4101 (US)** |
| (30) Priority: **27.09.2006 US 528087** | (74) Representative: **Denton, Michael John et al**<br>**Delphi European Headquarters,**<br>**64 avenue de la Plaine de France,**<br>**Paris Nord II,**<br>**B.P. 65059, Tremblay en France**<br>**95972 Roissy Charles de Gaulle Cedex (FR)** |
| (71) Applicant: **Delphi Technologies, Inc.**<br>**Troy, Michigan 48007 (US)** | |

(54) **Method of developing a classifier using adaboost-over-genetic programming**

(57)     An iterative process involving both genetic programming (18) and adaptive boosting (22, 24) is used to develop a classification algorithm (24) using a series of training examples. A genetic programming process (18) is embedded within an adaptive boosting loop (22, 24) to develop a strong classifier (24) based on combination of genetically produced classifiers.

FIG. 1

EP 1 906 343 A2

**Description**

TECHNICAL FIELD

The present invention relates to classifiers for characterizing input data, and more particularly to a novel method of developing a highly accurate classification algorithm using training examples.

BACKGROUND OF THE INVENTION

Classifiers are used to solve a variety of problems, including pattern recognition problems where the presence or state of a given object in a digital image must be determined with high accuracy. Many of these problems are binary in nature - that is, the classifier output indicates only whether the specified object state is true or false. Since the problems are often complex and not easily solvable, the classifier will typically include a learning mechanism such as a neural network that learns a process for solving the problem by analyzing a large number of representative training examples. Once the learning mechanism learns how to accurately classify the training examples, it can be used to classify other examples of the problem with similar accuracy. However, neural network classifiers are relatively complex and require substantial processing capability and memory, which tends to limit their usage in cost-sensitive applications.

It has been demonstrated that genetic programming principles can be used to develop reasonably accurate classifiers that are less costly to implement than neural network classifiers. Genetic programming uses certain features of biological evolution to automatically construct classifier programs from a defined set of possible arithmetic and logical functions. The constructed classifier programs are used to solve numerous training examples, and performance metrics (fitness measures) are used to rate the classification accuracy. The most accurate programs are retained, and then subjected to genetic alteration in a further stage of learning. The objective is to discover a single program that provides the best classification accuracy, and then to use that program as a classifier. Detailed descriptions of genetic algorithms and genetic programming are given in the publications of John H. Holland and John R. Koza, incorporated herein by reference. See in particular: Adaptation in Artificial and Natural Systems (1975) by Holland; and Genetic Programming: On the Programming of Computers by Means of Natural Selection (1992) and Genetic Programming II: Automatic Discovery of Reusable Programs (1994) by Koza.

Another less complex alternative to neural networks, known generally as ensemble learning, involves training a number of individual classifiers and combining their outputs. A particularly useful ensemble learning technique known as AdaBoost (adaptive boosting) adaptively influences the selection of training examples in a way that improves the weakest classifiers. Specifically, the training examples are weighted for each classifier so that training examples that are erroneously classified by a given classifier are more likely to be selected for further training than examples that were correctly classified.

SUMMARY OF THE INVENTION

The present invention is directed to an improved process involving both genetic programming and adaptive boosting for developing a classification algorithm using a series of training examples. A genetic programming process is embedded within an adaptive boosting loop to develop a strong classifier based on combination of genetically produced classifiers.

BRIEF DESCRIPTION OF THE DRAWINGS

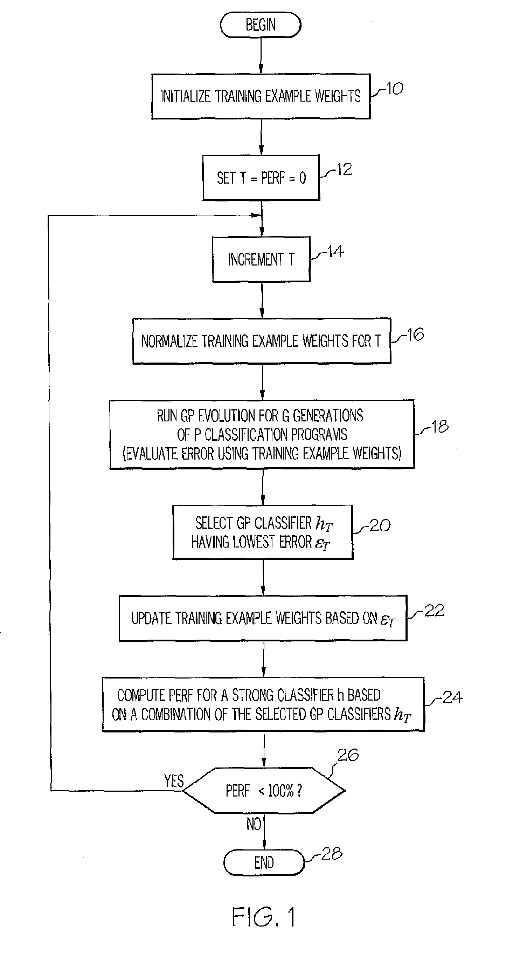

FIG. 1 is a flow diagram illustrating a process for developing a binary classifier according to the present invention.

DESCRIPTION OF THE PREFERRED EMBODIMENT

The method of the present invention is discussed herein in the context of a binary classifier that determines the eye state (i.e., open or closed) of a human subject based on a video image of the subject. The video images are characterized using over-complete Haar wavelets so that each training example is in the form of a Haar wavelet feature vector (i.e., an array of wavelet coefficients, or elements) and an associated classification result determined by a human expert. However, it will be recognized that the method of this invention is also applicable to other classification problems.

In general, an adaptive boosting (AdaBoost) technique is used to combine a population of small genetically developed programs (also referred to herein as GP trees), each comprising simple arithmetic functions of the input feature vector elements. The result is a classifier that provides equal or better accuracy than is ordinary achievable with genetic programming alone, with a negligible increase in the complexity of the classifier. The accuracy achieved with this method is comparable with other state-of-the-art classification methods (neural networks, support vector machines, decision trees), but with a significantly lower implementation cost. For example, a neural network of comparable accuracy can be as much as 1000 times more complex.

In FIG. 1, the method of the present invention is illustrated for a generalized binary classification problem as an iterative routine comprising the blocks 10-28. The process input is a set of training examples in the form of feature vectors. For purposes of the illustration, M training examples are represented by the pairs $(x_1,y_1)$ ... $(x_M,y_M)$, where each $x_i$ is a feature vector consisting of $N$ elements (Haar wavelet coefficients, for example), and each $y_i$ is a binary classification result. For purposes of discussion, the classification result $y_i$ can be zero for training examples for which the subject's eye is not closed, and one for training examples for which the subject's eye is closed. Each training example has an associated weight w and those weights are initialized at block 10 as follows:

$$\text{Initialize weights } w_{1,i} = \begin{cases} \dfrac{1}{2l} & for \ y_i = 0 \\ \dfrac{1}{2m} & for \ y_i = 1 \end{cases} \tag{1}$$

where $m$ is the number of positive training examples, and $l$ is the number of negative training examples. The first subscript of weight $w$ identifies the iteration number of the routine, while the second subscript identifies the training example. The block 12 is also executed to initialize the values of an iteration counter T and a performance metric PERF.

The blocks 14-24 represent a single iteration of a classifier development routine according to this invention. In each iteration, one genetically programmed (GP) classifier is selected, and the performance metric PERF is computed for a strong classifier based on the selected GP classifier and all GP classifiers selected in previous iterations of the routine. If the strong classifier correctly classifies all of the training examples, PERF will have a value of 100%, and the process will be ended as indicated by blocks 26-28. If the strong classifier incorrectly classifies at least one of the training examples, PERF will be less than 100%, and the blocks 14-24 will be re-executed to develop an additional GP classifier. Although not indicated in FIG. 1, the process may alternatively be exited if PERF reaches a threshold lower than 100%, or if a specified number of iterations have occurred. In each iteration of the routine, the training example weights are updated to give more weight to those training examples that were incorrectly classified by the selected GP classifier, and the updated weights are used to evaluate the fitness of GP classifiers produced in the next iteration of the routine.

At the beginning of each iteration, block 14 increments the iteration counter T, and block 16 normalizes the training example weights based on the count value as follows:

$$w_{T,i} \leftarrow \frac{w_{T,i}}{\sum_{k=1}^{M} w_{T,k}} \quad (\text{for } i = 1 \ldots M) \tag{2}$$

so that $w_T$ is a probability distribution.

The block 18 is then executed to carry out a genetic programming process in which a number $P$ of GP trees, each of depth D, are initialized and allowed to evolve over $G$ generations. In a typical application, both P and G may be approximately three-hundred (300), and D may have a value of 3-5 in order to reduce the classifier complexity. Preferably, each GP tree comprises primitive arithmetic functions and logical operators such as +, -, MIN, MAX, and IF. Standard genetic operators including reproduction, cross-over and mutation are used for the program tree evolution. Each genetically developed classifier is applied to all of the training examples, and the classification error $\varepsilon_j$ of a given GP classifier $h_j$ is computed as follows:

$$\varepsilon_j = \sum_i w_i \left| h_j(x_i) - y_i \right| \tag{3}$$

where $h_j(x_i)$ is the output of GP classifier $h_j$ for the feature vector $x_i$ of a given training example, $y_i$ is the correct classification result, and $w_i$ is the normalized weight for that training example. Of course, the fitness or accuracy of the GP classifier $h_j$ is inversely related to its classification error $\varepsilon_j$.

When the genetic programming loop signified by block 18 is completed, the block 20 selects the best GP classifier $h_T$ for the current iteration T. This is the classifier having the lowest classification error, designated as $\varepsilon_T$. Block 22 then updates the training example weights for the next iteration as follows:

$$w_{T+1,i} = w_{T,i}\beta^{1-e_i} \text{ , with} \qquad (4)$$

$$\beta_T = \frac{\varepsilon_T}{1-\varepsilon_T} \qquad (5)$$

where the exponent $(1 - e_i)$ is one when the training example $(x_i, y_i)$ is classified correctly, and zero when classified incorrectly. Consequently, the updated weight $w_{T+1}$ for a given training example is unchanged if the selected classifier $h_T$ classifies that training example incorrectly. Since the classification error $\varepsilon_T$ will have a value of less than 0.5 (simple chance), the term $\beta_T$ is less than one; consequently, the updated weight $w_{T+1}$ for a given training example is decreased if the selected GP classifier $h_T$ classifies that training example correctly. Thus, the weight of a training example that is incorrectly classified is effectively increased relative to the weight of a training example that is correctly classified. In the next iteration of the routine, the classification error $\varepsilon_T$ will be calculated with the updated training example weights to give increased emphasis to training examples that were incorrectly classified by the selected GP classifier $h_T$.

The block 24 evaluates the performance PERF of a strong classifier $h$ based on a combination of the selected GP classifiers $h_t$ (i.e., the currently selected GP classifier $h_T$ and the GP classifiers selected in previous iterations of the routine). The output $h(x)$ of the strong classifier $h$ is defined as follows:

$$h(x) = \begin{cases} 1 & \sum_t \alpha_t h_t(x) \geq \frac{1}{2}\sum_t \alpha_t \\ 0 & otherwise \end{cases} \qquad (6)$$

where $\alpha_t$ is a weight associated with a selected classifier $h_t$. The weight $\alpha_t$ is determined as a function of the above-defined term $\beta_t$ as follows:

$$\alpha_t = \log\frac{1}{\beta_t} \qquad (7)$$

As a result, the weight $\alpha_t$ for a selected classifier $h_t$ varies in inverse relation to its classification error $\varepsilon_T$. The strong classifier output $h(x)$ is determined for each of the training examples, and the performance metric PERF is computed as follows:

$$\mathrm{PERF} = 1 - \frac{\sum_{i=1}^{M} |h(x_i) - y_i|}{M} \qquad (8)$$

If the strong classifier h produces the correct result for all of the training examples, PERF will have a value of one (100%); block 28 will be answered in the negative to end the classifier development process. If the strong classifier incorrectly classifies one or more of the training examples, PERF will be less than one, and the blocks 14-24 will be re-executed to carry out another iteration of the routine. Additional iterations of the routine can be added after 100% performance is achieved, but a validation set is required. And as indicated above, the process may alternatively be exited if PERF reaches a threshold lower than 100%, or if a specified number of iterations have occurred.

When the classifier development process is complete, the strong classifier represented by equation (6), including each of the selected GP classifiers $h_t$, is implemented in a microprocessor-based controller and validated using non-training examples that are similar to the training examples used in the development process. Classification accuracy of at least 95% has been achieved in this manner for a variety of different applications.

In summary, the method of the present invention embeds genetic programming within an iterative adaptive boosting process to achieve significantly higher classification accuracy with low computational complexity. Testing on a variety of classification problems has shown that classifiers developed according to this invention provide performance equivalent to classifiers using neural networks and support vector machines. However, the computational complexity and memory requirements for implementing the developed classifier were significantly lower than required for classifiers using neural networks and support vector machines. Accordingly, the cost of hardware to implement a classifier developed according to this invention is significantly reduced for a given classification accuracy. Moreover, classifiers developed according to this invention can usually be intuitively understood, as compared to neural networks, which by nature are not intuitive.

While the present invention has been described with respect to the illustrated embodiment, it is recognized that numerous modifications and variations in addition to those mentioned herein will occur to those skilled in the art. Accordingly, it is intended that the invention not be limited to the disclosed embodiment, but that it have the full scope permitted by the language of the following claims.

## Claims

1.  A method of developing a classification algorithm based on classification training examples $(x_i, y_i)$, each training example including training input data $(x_i)$ and a desired classification label $(y_i)$, the method comprising the steps of:

    (a) performing a genetic programming (GP) process in which a prescribed number of GP classification programs are formed and evolved over a prescribed number of generations, and the classification error of each GP classification program is evaluated with respect to the training examples (18);
    (b) saving the GP classification program whose classification outputs most closely agree with the desired classification labels (20);
    (c) repeating steps (a) and (b) to form a set of saved GP classification programs (18, 20, 26); and
    (d) forming a classification algorithm for classifying non-training input data based on the saved GP classification programs and an output combination function, where the non-training input data is applied to each of the saved GP classification programs, and their classification outputs are combined by the output combination function to determine an overall classification of the non-training input data (24).

2.  The method of claim 1, including the steps of:

    applying the training input data of each classification training example to the classification algorithm to determine an overall classification for each training example (24); and
    repeating steps (a) and (b) until the overall classifications determined for the training examples agree with the respective desired classification labels (18, 20, 24, 26).

3.  The method of claim 1, where the GP process (18) includes determining a classification fitness of the GP classification programs, and the method includes the steps of:

establishing a weight for each classification training example (10);
using the established weights to determine the classification error of the GP classification programs (18) in step (a);
determining a classification error (18) of the GP classification program saved in step (b); and
updating the established weights for the classification training examples (22) based on the determined classification error in a manner to give increased weight to classification training examples that were incorrectly classified by the GP classification program saved in step (b).

4. The method of claim 1 wherein:

the output combination function of step (d) includes a weight for each of the saved GP classification programs (24), such weights being applied to the classification outputs of respective saved GP classification programs; and
the weight for each saved GP classification program is determined based on a classification error of that saved GP classification program to give increased emphasis to saved GP classification programs whose classification outputs most closely agree with the desired classification labels (24).

5. A method of developing a classification algorithm based on classification training examples$(x_i, y_i)$, each training example including training input data $(x_i)$ and a desired classification label $(y_i)$, the method comprising the steps of:

(a) performing a genetic programming (GP) process (18) in which a prescribed number of GP classification programs are formed and evolved over a prescribed number of generations, and the classification error of each GP classification program is evaluated with respect to the training examples;
(b) saving the GP classification program whose determined classification error is lowest (20);
(c) applying the training input data of each classification training example to each saved GP classification program to form classification outputs, combining the classification outputs to determine an overall classification of each classification training example, and computing a performance metric based on a comparison of the overall classifications with the desired classification labels (24);
(d) repeating steps (a), (b) and (c) to form and save additional GP classification programs until the performance metric reaches or exceeds a threshold (26); and
(e) forming a classification algorithm for classifying non-training input data based on the saved GP classification programs and an output combination function, where the non-training input data is applied to each of the saved GP classification programs, and their classification outputs are combined by the output combination function to determine an overall classification of the non-training input data (24).

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOLLAND.** *Adaptation in Artificial and Natural Systems,* 1975
- *Genetic Programming: On the Programming of Computers by Means of Natural Selection,* 1992
- **KOZA.** *Genetic Programming II: Automatic Discovery of Reusable Programs,* 1994